# EUROPÄISCHE PATENTSCHRIFT

(11) **EP 3 785 398 B1**
(45) Veröffentlichungstag und Bekanntmachung des Hinweises auf die Patenterteilung: **20.04.2022**
(21) Anmeldenummer: 18722005.8
(22) Anmeldetag: 26.04.2018
(51) Int. Cl.: H04L 9/32, H04L 29/06, G06F 21/31, G06F 21/62, H04L 29/08

(54) **MULTI-FAKTOR ZUGRIFFSKONTROLLVERFAHREN IN ANONYMEN SYSTEMEN**
METHODS FOR MULTI-FACTOR ACCESS CONTROL IN ANONYMOUS SYSTEMS
PROCÉDÉ DE CONTRÔLE D'ACCÈS MULTI-FACTEUR DANS DES SYSTÈMES ANONYMES

(43) Veröffentlichungstag der Anmeldung: 03.03.2021
(73) Patentinhaber: SECLOUS GmbH, 90763 Fürth (DE)
(72) Erfinder: REHNELT, Kai, 90763 Fürth (DE)
(74) Vertreter: Feller, Frank
(86) Internationale Anmeldenummer: PCT/EP2018/060794
(87) Internationale Veröffentlichungsnummer: WO 2019/206420

(56) Entgegenhaltungen:
- DE-A1-102013 203 257
- DE-A1-102014 106 310
- US-A1- 2011 145 589

## Beschreibung

Die Erfindung betrifft ein Multi-Faktor Zugriffskontrollverfahren zwischen zumindest einem Client und einem Server unter Zuhilfenahme einer Zugriffs-Kontroll-Instanz, wobei keine Partei für sich alleine genommen in der Lage ist, die Daten des Clients auf dem Server aufzufinden, bei voller Ausprägung des Verfahrens selbst der Server nicht.

Ein Teil des Verfahrens ist der Verzicht auf Informationen zur Identifikation des Clients (zur Anonymisierung), wodurch keine Überprüfung der Zugriffsinformationen (Eingabefaktoren) vom Client mit den gespeicherten Werten auf dem Server erfolgen kann, wie es bei heutigen Systemen üblich ist.

Beim heutigen Stand der Technik werden keine Multi-Faktor Zugriffskontrollverfahren verwendet, die direkten Zugriff auf die Daten ermöglichen, sondern eine abgeschwächte Form durch eine Multi-Faktor Authentifizierung durchgeführt, welche die Eingabefaktoren des Clients (beispielsweise ein Benutzername und Passwort) während des Authentifizierungsprozesses durch weitere Faktoren ergänzt, die der Client vom Server erhält (etwa als temporärer SMS-Code, Farbcode in einer Applikation etc.), und nach Eingabe dieser Faktoren auf dem Client und Übertragung auf den Server, diese Eingabefaktoren mit den auf dem Server gespeicherten Werten vergleicht (Ja/Nein Prüfung). Im Positiv-Fall gilt der Client als authentifiziert und ihm wird Zugriff auf alle Daten erteilt. Somit muss der Server in der Lage sein eine eindeutige Zuordnung vom Client zu den auf dem Server gespeicherten Authentifizierungs-Daten durchzuführen. Da der Server somit sensitive Informationen für diesen Vergleich speichern muss, ist im Stand der Technik das Vertrauen in den Server, beziehungsweise dessen Betreiber, ein wesentlicher Bestandteil der Sicherheit. Dies gilt umso mehr, da heutige Zugriffskontrollverfahren durch Manipulation des Servers ausgeschaltet oder umgangen werden können.

Für viele Anwender ist es wichtig, dass der Betreiber einer Plattform möglichst wenige Informationen über sie speichert und diese personenbezogenen Daten nicht für andere Zwecke, wie etwa Werbung, einsetzt. Dies wird mittels anonymen Systemen erreicht.

Ein anonymes System ist dadurch gekennzeichnet, dass es keinerlei auswertbare Informationen enthält, insbesondere keine sogenannten Meta-Daten (ergänzende Informationen, etwa zu den Benutzern oder den gespeicherten Daten), und somit auch kein Vertrauen in den Server, beziehungsweise dessen Betreiber notwendig ist. Um Anonymität zu erreichen, kann es auf einem Server allerdings keine Authentifizierung von Benutzer (beziehungsweise Clients) geben, um diesen Zugriffe auf Daten zu gewährleisten bzw. zu verwehren, da jegliche Informationen auf dem System anonym sind. Somit ist es im Stand der Technik unmöglich, eine Zuweisung oder Überprüfung der Daten eines bestimmten Benutzers (beziehungsweise Clients) durchzuführen. Dadurch können die heutigen Multi-Faktor Authentifizierungsverfahren nicht angewendet werden, was die vorliegende Erfindung notwendig machte.

Die Erfindung, wie in den Ansprüchen definiert, ersetzt dabei die heute übliche JA/NEIN-Ubereinstimmungsprüfung durch ein Verfahren, bei dem Client und Server einen Prozess durchlaufen müssen, in welchem Identifikationswerte für die Daten verwendet werden, welche sich beim Client und dem Server unterscheiden (statt einem direkten Zugriff (für die Dauer der Session, d.h. der temporären logischen Verbindung zwischen Client und Server) auf alle Daten nach erfolgreicher Ja/Nein-Überprüfung zu erhalten)
- wobei alle Daten, Aktionen und Transaktionen über (Daten-) Identifikationswerte abgewickelt werden - und der effektivste Schutz für die Zugriffskontrolle somit erfindungsgemäß hier angesetzt wird,
- wobei Daten-Identifikationswerte vom Client und Daten-Identifikationswerte vom Server nur durch eine dritte Stelle (Zugriffs-Kontroll-Instanz, ZKI) einander zugeordnet werden können,
- wobei für jeden Zugriff auf einen Daten-Identifikationswert ein immer anderer, temporärer Zuordnungswert als Schnittstelle zwischen dem Client und dem Server generiert wird,
- wobei weder der Client in der Lage ist, seine Daten auf dem Server zu finden, noch der Server in der Lage ist, Daten auf dem Server einem bestimmten Client zuzuordnen,
- wobei selbst ein von einem Angreifer modifizierter oder infizierter Client keinerlei Informationen zum Zugriff feststellen kann,
- wobei dieses Multi-Faktor Zugriffskontrollverfahren auch durch Manipulation von Client oder Server aufgrund der mathematischen Grundlage unumgänglich ist,
- wobei eine - einzig durch die ZKI ermöglichte - temporär gültige Übersetzung, beziehungsweise Verknüpfung über Zwischenwerte, zwischen dem Client und dem Server erfolgt,
- wobei die ZKI eine Positivliste besitzt, welche Clients Zuordnungswerte erhalten, um Daten mit dem Server austauschen zu können und
- wobei die ZKI eine zentrale Zugriffssteuerung (etwa für Firmen) in anonymen Systemen ermöglicht - ohne jede Transaktion einzeln kontrollieren zu müssen,
   o um beispielsweise explizit den Datenaustausch zwischen Mitarbeitern kontrollieren zu können und
   o dadurch implizit alle anderen (anonymen) Benutzer auszuschließen und
   o Zugriffe nur unter bestimmten Bedingungen, wie etwa zu bestimmten Zeiten, bestimmten Anwendungen oder bestimmten Orten zuzulassen

### ANWENDUNGSBEISPIELE DES VERFAHRENS

Mittels der vorliegenden Erfindung kann beispielsweise eine Zwei-Faktor-Authentifizierung erreicht werden, welche einen kryptographischen Mehrwert gegenüber dem heute üblichen Ja/Nein- Vergleich bringt. Dies wird dadurch erreicht, dass der Benutzer nicht weiß, wo seine Daten zu finden sind, da die Daten-Identifikationswerte, welche für ihn relevant sind, nicht mit denen übereinstimmen, welche der Server ablegt.

Eine weitere mögliche Ausführungsform ist das bedingungsgesteuerte Begrenzen von Zugriffsmöglichkeiten durch einen Verwaltungsserver (Zugriffs-Kontroll-Instanz) von Benutzern auf Ihre Daten oder Daten anderer Mitarbeiter. So kann eine Zugriffs-Kontrollinstanz beispielsweise festlegen, dass nur Benutzer mit bestimmten IP-Adressen auf bestimmte Daten zugreifen können, oder dass bestimmte Benutzer bestimmte Daten nur während der Öffnungszeiten der Firma erreichen können. Weiteres kann eine Zugriffs-Kontrollinstanz mittels einer Positivliste festlegen, welcher Benutzer mit welchem Benutzer unter welchen Bedingungen Daten austauschen darf. Auch in diesem Fall wird dies mit heutiger Technik durch eine Berechtigung gesteuert, also durch einen Ja/Nein-Vergleich, wobei der Server die Zugriffsberechtigungen anhand einer Bedingungs-Berechtigungs-Liste prüft. Kryptographische Sicherheit kann somit im Stand der Technik nicht erreicht werden. Hier gelten die gleichen oben genannten Vorteile des Verfahrens analog.

Mittels der vorliegenden Erfindung ist weiter auch eine Modifikation des Blom-Verfahrens und anderer vergleichbarer Verfahren für anonyme Systeme möglich, mittels welchen ein zeitlich begrenzt gültiger symmetrischer Schlüsselaustausch mit Hilfe einer vertrauenswürdigen Partei gewährleistet wird. Auch in diesem Fall gilt der kryptographische Mehrwert, dass die Parteien, welche Schlüssel austauschen, nicht ihre Privaten Schlüssel kennen müssen, und nur mit temporären Varianten dieser Schlüssel gearbeitet wird.

### MEHRWERT UND EFFEKTE DES VERFAHRENS

Durch das Verfahren wird erreicht, dass der Client mit eigenen Identifikationswerten für seine Daten (Client-Daten-Identifikationswerte) arbeitet, welche sich aber von den Identifikationswerten der Daten auf der Speichervorrichtung (Speichervorrichtungs-Daten-Identifikationswerten), beziehungsweise dem Server, unterscheiden. Aus Sicht des Clients hat diese Unterscheidung der beiden Identifikationswerte keine Relevanz, er stellt einfach eine Anfrage und bekommt eine entsprechende Antwort darauf. Das Verfahren stellt dabei ebenfalls sicher, dass der Server anhand der Speichervorrichtungs-Daten-Identifikationswerte keine Zuordnung der Daten zu bestimmten Clients durchführen und somit keinen Zusammenhang zwischen den einzelnen Speichervorrichtungs-Daten-Identifikationswerten (und damit zwischen den gespeicherten Daten) feststellen kann.

In keinem Fall kann der Client seine Daten auf dem Server auffinden, solange er den temporären Session-Client-Umwandlungswert der Zugriffs-Kontroll-Instanz nicht erhalten hat. Keine Anfrage nach ID-Werten würde aufgrund der extrem großen Zahlen (2^128 - 2^256 Bit) einen Datensatz auf der Speichervorrichtung auffinden, da die Datensatz-Identifikationswerte des Clients nicht identisch mit den Datensatz-Identifikationswerten der Speichervorrichtung sind.

Die kryptographische Sicherheit wird weiterhin erhöht, da der Client nur die Daten ohne die Identifikationswerte vom Server erhält - und somit gewährleistet ist, dass der Server weder seinen Speichervorrichtungs-Umwandlungs-Basiswert noch irgendwelche Speichervorrichtungs-Daten-Identifikationswerte an Clients übergibt. Zur Kennzeichnung der Daten übergibt der Server die Daten entweder in der angefragten Reihenfolge an den Client oder er übergibt die Daten inklusive der Session-Datensatz-Identifikationswerte. Somit erhält der Client keine Informationen über die Werte auf der Speichervorrichtung, kann aber die Daten schnell seinen Daten-Identifikationswerten zuordnen.

Darüber hinaus ermöglicht das Verfahren durch Verwendung von Identifikationswerten mit Hilfe von Äquivalenzumformungen die Erstellung einfacher Gleichungen, wobei die Stellenanzahl des gewählten Identifikationswertes die Anzahl der möglichen Lösungen dieser Gleichungen definiert, wobei nur eine Lösung jener entspricht, mittels welcher der Client seine Daten auf dem Server finden kann.

Dies entspricht dem Prinzip der Kryptographischen Sicherheit: Mögliche Schlüssel sollen sehr schnell ausprobiert werden können, aber es soll eine extrem hohe Anzahl an möglichen Schlüsseln geben, damit Brute-Force-Angriffe nicht praktikabel sind. (2^128 gelten auch für die Zukunft als ausreichend).

Unter diesen Voraussetzungen ist es daher möglich für diese Gleichungen, sowohl am Client als auch am Server extrem schnelle Operationen wie das Exklusive Oder (XOR) oder einfache Additionen zu verwenden.

Es kann jede Funktion verwendet werden, welche Äquivalenzumformungen mit allen eingesetzten Zahlen für die Variablen zulässt. Um einen ausreichenden Kryptographischen Schutz zu gewährleisten, muss aber vor allem der Session-Kennzeichnungswert eine ausreichende Entropie aufweisen, also als Berechnungsbasis eine Zufallszahl in einem Wertebereich von 1 bis mindestens 2^128.

### ABLAUF DES VERFAHRENS

Der Client hat Client-Daten-Identifikationswerte, welche konstant sind, aber weder die Zugriffs-Kontroll-Instanz noch die Speichervorrichtung kennen sollen.

Die Speichervorrichtung hat Speichervorrichtungs-Daten-Identifikationswerte, welche konstant sind, aber weder die Zugriffs-Kontroll-Instanz noch der Client kennen sollen. Eine Anforderung ist, dass eine eindeutige Umwandlung von den Client-Daten-Identifikationswerten zu den Speichervorrichtungs-Daten-Identifikationswerten mittels, bei jeder Session anderen, Umwandlungswerten stattfindet. Um sicherzustellen, dass eine Zugriffs-Kontroll-Instanz vom Client immer gefragt werden muss, wird ein zusätzlicher Session-Client-Umwandlungswert eingeführt, der mit dem Client-Daten-Identifikationswert verknüpft wird. Somit werden statt dem statischen Client-Daten-Identifikationswert bei jeder Session entsprechend andere Session-Daten-Identifikationswerte übertragen.

Um immer Session-Umwandlungswerte zu erhalten, welche der Client NICHT alleine berechnen kann, ist es daher notwendig, dass die Zugriffs-Kontroll-Instanz und die Speichervorrichtung ein gemeinsames Geheimnis (Pre-shared Secret als Zugriffs-Kontroll-Instanz-Speichervorrichtungs-Geheimnis) teilen.

Alternativ zu einem Pre-shared Secret kann auch ein Session-Geheimnis zwischen der Speichervorrichtung und der Zugriffs-Kontroll-Instanz dadurch gebildet werden, dass die Speichervorrichtung bei Erhalt einer Verbindungsanfrage durch einen Client die Zugriffskontroll-Instanz kontaktiert und ihr ein Client-Kennzeichen übergibt. Die Zugriffs-Kontroll-Instanz müsste in diesem Fall aber sowohl der Speichervorrichtung einen Session-Speichervorrichtungs-Umwandlungswert, als auch dem Client einen dazu passenden Session-Client-Umwandlungswert, übergeben. Allerdings sollte die Speichervorrichtung wenig belastet werden, da diese eine Vielzahl an Clients bedient, welche wiederum einer Vielzahl an Zugriffs-Kontroll-Instanzen unterliegen. Entsprechend bietet diese Ausführungsform keine Vorteile, aber deutliche Nachteile gegenüber der im Anspruch 1 beschriebenen Variante, und ist daher im Folgenden nicht im Detail ausgeführt.

Es ist wichtig, dass die Speichervorrichtung die Session-Kennzeichen als sich immer ändernden Wert an den Client übergibt, denn ansonsten könnte der Client ein immer gleiches Session-Kennzeichen an die Speichervorrichtung übermitteln und es wäre somit für den Client nicht mehr notwendig, die Zugriffs-Kontroll-Instanz bei jedem Start einer Session zu kontaktieren. In diesem Fall hätte die Zugriffs-Kontroll-Instanz keine Kontrolle (Protokollierung, Einschränkung unter bestimmten Bedingungen) über die Verbindungen von Clients zur Speichervorrichtung.

Analog kann der Client für seine Client-Daten-Identifikationswerte niemals die auf der Speichervorrichtung zugeordneten Speichervorrichtungs-Daten-Identifikationswerte feststellen, da der Server ihm diese Werte nicht übermittelt (und der Server selbst seine Speichervorrichtungs-Daten-Identifikationswerte einem Client zuordnen kann). Um sicherzustellen, dass der Client immer die Zugriffs-Kontroll-Instanz kontaktieren muss, darf der Client nie die Möglichkeit haben, den Client-Umwandlungswert zu erkennen, denn sonst hätte er die Möglichkeit zusammen mit dem Session-Kennzeichen den Session-Client-Umwandlungswert zu generieren (und wäre nicht mehr gezwungen, die Zugriffs-Kontroll-Instanz zu kontaktieren).

Um den Client-Umwandlungswert vor dem Client geheim zu halten, ist die Einführung einer Gleichung mit drei Termen (a *<Operation> b* = c) notwendig, welche mittels Äquivalenz-Umwandlung um Session-Werte bei den Termen a und b erweitert wird. Vorzugsweise wird aufgrund der Geschwindigkeit und der gleichwertigen Sicherheit zu jeder anderen Funktion ein exklusives Oder (XOR) verwendet (dies wird auch zur Vereinfachung in dieser Beschreibung stellvertretend benutzt):
Der Client kennt das Session-Kennzeichen, genauso wie es der Speichervorrichtung (beziehungsweise dem Server) und der Zugriffs-Kontroll-Instanz bekannt ist, da er dieses von der Zugriffs-Kontroll-Instanz übermittelt bekommt. Aber der Client kennt weder den Client-Umwandlungswert, noch den Speichervorrichtungs-Umwandlungswert. Nachdem sowohl die Zugriffs-Kontroll-Instanz als auch die Speichervorrichtung den Speichervorrichtungs-Umwandlungswert kennen, ist es für diese beiden möglich, ein gemeinsames Session-Geheimnis aus dem Speichervorrichtungs-Umwandlungswert zusammen mit dem Session-Kennzeichen zu bilden, sofern sichergestellt ist, dass der Client nicht auf den Speichervorrichtungs-Umwandlungswert schließen kann. Dies wird mittels einer sicheren Hash-Funktion gewährleistet, welche auf diese beiden Werte angewandt wird. Es ist beispielsweise auch möglich diese beiden Werte mit einem XOR zu kombinieren, zusammenzuhängen oder beliebig anders in Kombination zu bringen. Ebenso ist die Verwendung von konstanten SALT-Werten (zufällig gewählte Zeichenfolgen) möglich. Veränderungen dieser Details haben auf die bereits gegebene Sicherheit des Verfahrens keinen Einfluss.

Um zu verhindern, dass weder die Speichervorrichtung noch der Client den Client-Umwandlungswert erfahren, wird als temporärer Schutzwert der Session-Client-Umwandlungs-Schutzwert verwendet. Beispielsweise kann dieser durch eine sichere Hashfunktion generiert werden, die auch die Forderung nach einer hohen Entropie erfüllt. Durch ein XOR (oder eine gleichwertige Funktion) von Session-Client-Umwandlungs-Schutzwert und Client-Umwandlungswert wird der Session-Client-Umwandlungswert generiert, welcher für den Client nicht mehr in seine Ursprungsteile zu zerlegen ist, da es eine Kombination von zwei für den Client unbekannten Werten ist. Obwohl sich der Session-Client-Umwandlungs-Schutzwert bei jeder Session ändert (unabhängig von seiner Entropie), kann der Client diese Gleichung mit zwei unbekannten Werten auch dann nicht lösen, wenn er viele unterschiedliche Session-Client-Umwandlungswerte sammeln würde. Es gibt immer eine Unbekannte mehr in den Gleichungen als es Gleichungen gibt.

Da der Session-Client-Umwandlungs-Schutzwert nicht im finalen Mapping vom Client-Daten-Identifikationswert auf den Speichervorrichtungs-Daten-Identifikationswert enthalten sein darf, wird dieser sowohl auf der Seite des Clients, als auch der Speichervorrichtung / des Servers hinzugenommen, wodurch der Wert herausgerechnet wird und sich selbst aufhebt. Daher die Notwendigkeit der Äquivalenz-Umformung und der Verwendung einer entsprechenden Funktion, die dies erfüllt.

Somit ist erklärt, dass eine symmetrische Verschlüsselung wie der AES nicht geeignet ist, da es keine Möglichkeit gibt, für den AES zwei Schlüssel zu finden, die die gleichen Daten hintereinander identisch so verschlüsseln wie zwei andere Schlüssel. Ebenso gilt es für Hash-Funktionen und andere Funktionen, welche nicht für Äquivalenz-Umformungen geeignet sind. Weiters ist ein OR oder ein AND nicht geeignet, da durch diese Befehle Informationen vernichtet werden (A **OR** B liefert beispielsweise bei 2x TRUE und 2x FALSE als Input 3x TRUE und 1x FALSE als Ergebnis, und **A AND B** liefert bei 2x TRUE und 2x FALSE als Input 1x TRUE und 3x FALSE als Ergebnis).

Analoge Anforderungen gelten für die Speichervorrichtung (Server), denn diese darf ebenfalls weder den Client-Umwandlungswert noch die Client-Daten-Identifikationswerte berechnen können. Der Client übermittelt dem Server die Client-Daten-Identifikationswerte vermischt (beispielsweise mit XOR) mit den Client-Daten-Identifikationswerten, was ebenfalls zu einer nicht eindeutig lösbaren Gleichung mit zwei Unbekannten führt.

Auch beim Sammeln vieler Session-Daten-Identifikationswerte seitens des Clients, oder seitens der Speichervorrichtung gibt es immer genau eine Unbekannte mehr als es Gleichungen gibt. Der Session-Client-Umwandlungsschutzwert wird in dieses XOR hinzugenommen, um die Äquivalenz-Umwandlung zu erfüllen und den Schutzwert herauszurechnen.

Somit werden auf der Speichervorrichtung / dem Server die Client-Daten-Identifikationswerte mit einem XOR auf ein Geheimnis abgelegt, welches nur die Zugriffs-Kontroll-Instanz zur Gänze kennt. Dieses Geheimnis besteht aus zwei Teilen, dem Client-Umwandlungswert und den Speichervorrichtungs-Umwandlungswert.

Die Zugriffs-Kontroll-Instanz bekommt bis auf das Client-Kennzeichen und ein Session-Kennzeichen (Zufallswert der Speichervorrichtung) keine Werte vom Client oder der Speichervorrichtung übermittelt. Somit ist sichergestellt, dass die Zugriffs-Kontroll-Instanz alleine keine für den Zugriff auf Daten notwendigen Informationen generieren kann.

Zur Übertragung aller Werte zwischen Client, Zugriffs-Kontroll-Instanz und Speichervorrichtung wird eine sichere Verbindung (TLS) empfohlen.

Wie im Stand der Technik bereits bekannt, kann eine AES-Verschlüsselung oder anderweitige Verschlüsselung ebenfalls als Hash-Funktion gesehen werden. Da dies aber Nachteile gegenüber reinen sicheren Hash-Algorithmen aufweist, wird die Verwendung von SHA2-256, SHA3-256, Blake2 oder anderer solcher Hash-Algorithmen empfohlen. Es können ebenfalls Hashes mit 384-bit, 512-bit oder anderer Ergebnislänge verwendet werden, wobei dies keinen nennenswerten Einfluss auf die Sicherheit des Verfahrens hat.

Wie schon erwähnt, kann anstatt des XOR auch eine Permutation und/oder eine Substitution oder andere geeignete Funktionen verwendet werden.

Auf die Details der Übertragung wird nicht eingegangen, da sie dem Anwender offenstehen und im Stand der Technik hinreichend bekannt sind. So ist es beispielsweise erforderlich, bei jeder Kommunikation den Session-Kennzeichnungswert mitzusenden. Dies wird aber nicht in den Zeichnungen gezeigt, um den Fokus auf das Wesen der Erfindung zu setzen.

### ÜBERSICHT DER IN DER VERFAHRENSBESCHREIBUNG VERWENDETEN PARTEIEN, PARAMETER UND ABKÜRZUNGEN

### Parteien

| **Parameter** | **Kurz-Bezeichnung** * | **Ursprung** CL** | **ZK I** | **SV** |
|---|---|---|---|---|
| Client-Kennzeichen | S-CK | E | Ü | Ü |
| Positivliste (der von der ZKI erlaubten Clients) | PL | | E | |
| Client-Zugriffs-Kontroll-Instanz-Geheimnis | S-CG | | E | |
| Speichervorrichtungs-Zugriffs-Kontroll-Instanz-Geheimnis | S-SG | | E | |
| Vorab geteiltes Zugriffs-Kontroll-Instanz-Speichervorrichtungs-Geheimnis | S-ZSG | | E/ B | Ü |
| Client-Umwandlungswert | S-CU | | E | |
| Session-Kennzeichen | T-XK | Ü | Ü | E |
| Session-Client-Umwandlungswert-Schutzwert | T-CUS | | B | B |
| Session-Client-Umwandlungswert | T-CU | Ü | B | |
| Session-Speichervorrichtungs-Umwandlungswert | T-SU | | B | B |
| Client-Daten-Identifikationswert | S-CDI | E | | |
| Session-Daten-Identifikationswert | T-XDI | B | | Ü |
| Speichervorrichtungs-Daten-Identifikationswert | S-SDI | | | B |
| Speichervorrichtungs-Umwandlungswert | S-SU | | E | Ü |
| Session-Speichervorrichtungs-Umwandlungswert-Schutzwert | T-SUS | | E | |

| | | | | |
|---|---|---|---|---|
| **CL** - Client **ZKI** - Zugriffs-Kontroll-Instanz **SV** - Speichervorrichtung / Server | | | | |

***Kurzbezeichnung g**

| *S- statische Daten* | *C (Client)* S | *U (Umwandlungswert)* |
|---|---|---|
| *T- temporäre Daten* | *(Speichervorrichtung* ) | *US (Umwandlung-Schutzwert)* |
| | *Z (Zugriffs-Kontroll-Instanz)* | *K (Kennzeichen)* |
| | *X (Session-Wert)* | *I (Identifikationswert)* |

| | | |
|---|---|---|
| ** E - Eigentümer, erzeugt/definiert Wert, B - Berechnet den Wert, Ü - Übermittelte Werte | | |

### KURZBESCHREIBUNG DER ZEICHNUNGEN

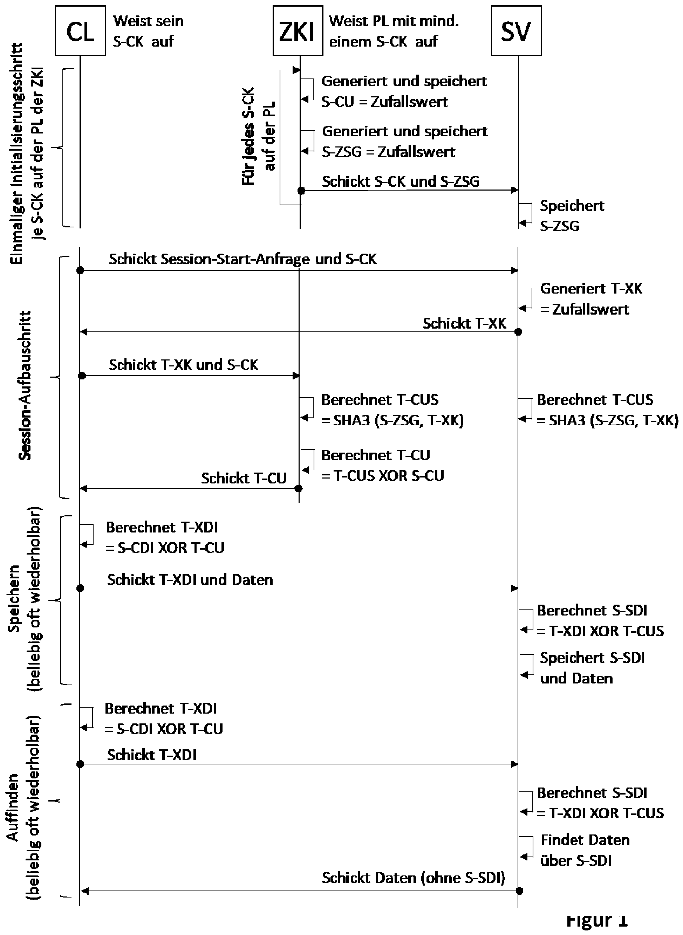

Figur 1 zeigt ein Ausführungsbeispiel der Erfindung gemäß Anspruch 1.

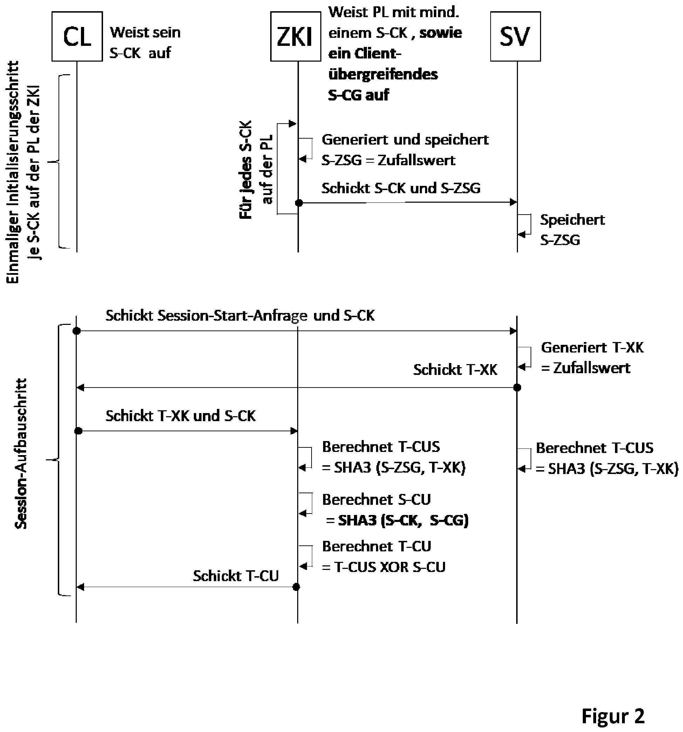

Figur 2 zeigt ein Ausführungsbeispiel der Erfindung gemäß Anspruch 2.

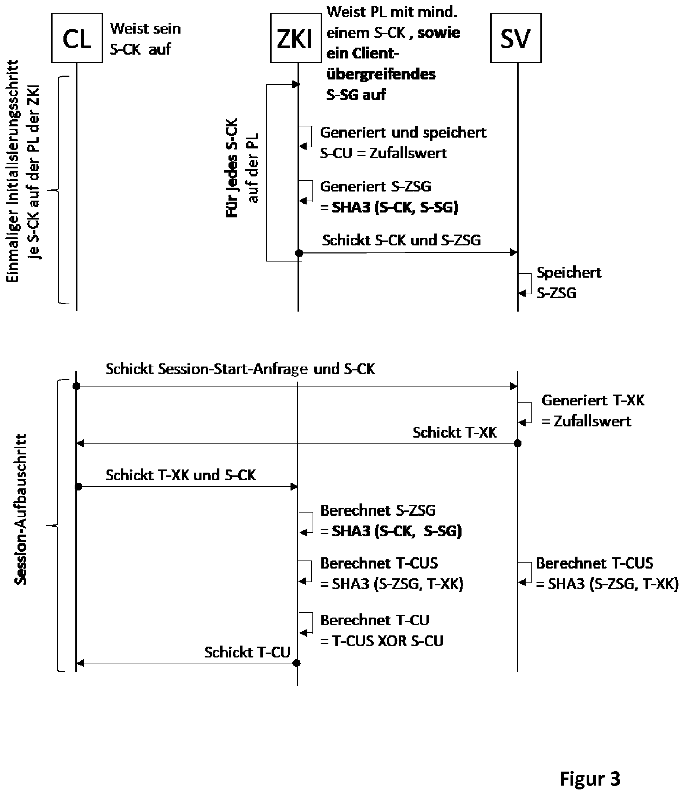

Figur 3 zeigt ein Ausführungsbeispiel der Erfindung gemäß Anspruch 3.

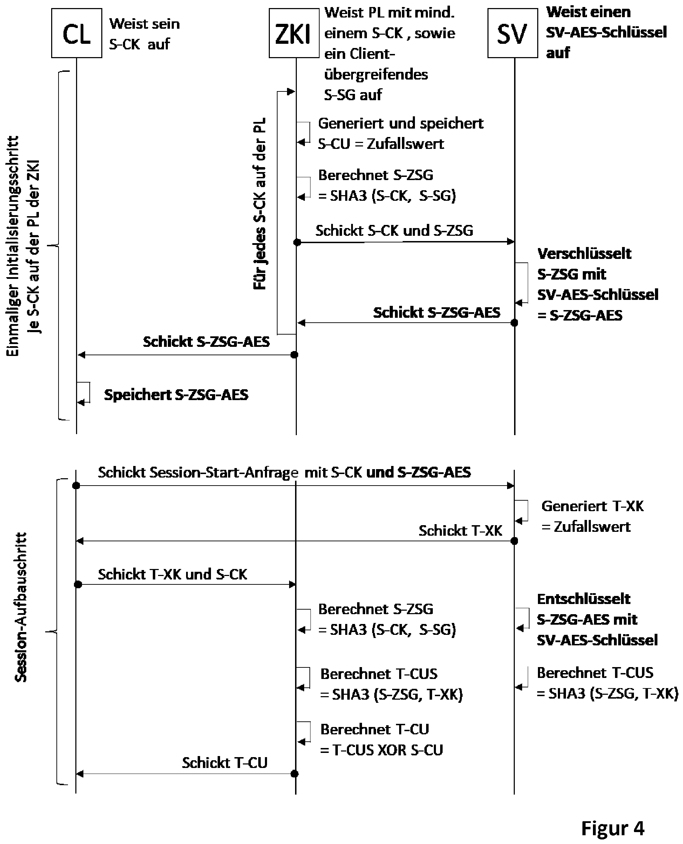

Figur 4 zeigt ein Ausführungsbeispiel der Erfindung gemäß Anspruch 4.

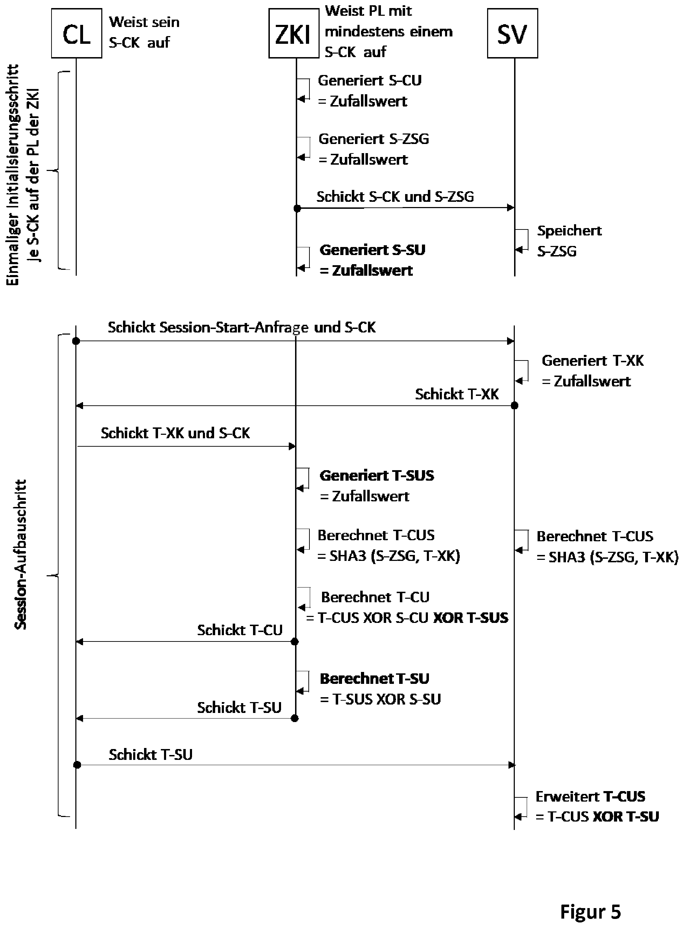

Figur 5 zeigt ein Ausführungsbeispiel der Erfindung gemäß Anspruch 5.

## Patentansprüche

1. Verfahren zur Speicherung und zum Auffinden von Daten von durch eindeutige Client-Kennzeichen (S-CK) identifizierbare Clients (CL) auf einer Speichervorrichtung (SV), wobei diese Daten zumindest Client-Daten-Identifikationswerte (S-CDI) enthalten, welche der Client (CL) den Daten beliebig zuordnet, und wobei diese Daten vom Client (CL) auf der Speichervorrichtung (SV) ausschließlich über diese Client-Daten-Identifikationswerte (S-CDI) aufgefunden werden, und wobei eine Zugriffs-Kontroll-Instanz (ZKI) vorhanden ist, die eine anpassbare Positivliste (PL) als Auflistung der Client-Kennzeichen (S-CK) jener ausgewählten Clients (CL) aufweist, die ausschließlich in einem Session-Aufbauschritt, beginnend mit einer Session-Start-Anfrage, eine temporäre Ergänzungsinformationen von dieser Zugriffs-Kontroll-Instanz (ZKI) erhalten und mit dieser auf der Speichervorrichtung (SV) Daten Speichern und Auffinden können, wobei jede temporäre Ergänzungsinformation jeweils nach einem bestimmten Zeitraum ihre Gültigkeit verliert, **dadurch gekennzeichnet, dass**
eine Äquivalenz-Umformungsfunktion aus der Gesamtheit der Äquivalenzumformungs-geeigneten Funktionen, vorzugsweise ein exklusives Oder (XOR), ausgewählt wird,
für jedes Client-Kennzeichen (S-CK) auf der Positivliste (PL) der Zugriffs-Kontroll-Instanz (ZKI) ein anfänglicher Client-Initialisierungsschritt ausgeführt wird, in welchem zumindest
ein frei wählbares ZKI-SV-Geheimnis (S-ZSG) für das jeweilige Client-Kennzeichen (S-CK) als gemeinsames Geheimnis zwischen der Zugriffs-Kontroll-Instanz (ZKI) und der Speichervorrichtung (SV) so festgelegt wird, dass sowohl die Zugriffs-Kontroll-Instanz (ZKI) als auch die Speichervorrichtung (SV) das ZKI-SV-Geheimnis (S-ZSG) dauerhaft für das jeweilige Client-Kennzeichen (S-CK) abrufen oder berechnen können,
die Zugriffs-Kontroll-Instanz (ZKI) einen geheimen Client-Umwandlungswert (S-CU) für das jeweilige Client-Kennzeichen (S-CK) beliebig generiert und diesen dauerhaft abrufen oder berechnen kann,
dass ein Client (CL) für den Erhalt einer temporären Ergänzungsinformation von der Zugriffs-Kontroll-Instanz (ZKI), welche für das nachfolgende Speichern und Auffinden von Daten notwendig ist, im Session-Aufbauschritt eine Session-Start-Anfrage an die Speichervorrichtung (SV) sendet, welche zumindest sein Client-Kennzeichen (S-CK) enthält,
und als Antwort von der Speichervorrichtung (SV) einen temporären, einmaligen Session-Kennzeichnungswert (T-XK) erhält und der Client (CL) diesen Session-Kennzeichnungswert (T-XK) zusammen mit dem Client-Kennzeichen (S-CK) an die Zugriffs-Kontroll-Instanz (ZKI) übermittelt
und nachdem die Zugriffs-Kontroll-Instanz (ZKI) diesen Session-Kennzeichnungswert (T-XK) zusammen mit dem Client-Kennzeichen (S-CK) erhalten hat, sowohl die Zugriffs-Kontroll-Instanz (ZKI) als auch die Speichervorrichtung (SV) einen Session-Client-Umwandlungswert-Schutzwert (T-CUS) jeweils dadurch berechnen, dass beide eine sichere Hashfunktion auf zumindest das ZKI-SV-Geheimnis (S-ZSG) und den einmaligen Session-Kennzeichnungswert (T-XK) anwenden
und die Zugriffs-Kontroll-Instanz (ZKI) einen Session-Client-Umwandlungswert (T-CU) als temporäre Ergänzungsinformation dadurch errechnet, dass sie zumindest die ausgewählte Äquivalenz-Umformungsfunktion auf den Session-Client-Umwandlungswert-Schutzwert (T-CUS) und den Client-Umwandlungswert (S-CU) anwendet und diesen Session-Client-Umwandlungswert (T-CU) dem Client (CL) zur flüchtigen Speicherung übermittelt,
und dass ein Client (CL) nach Erhalt eines Session-Client-Umwandlungswertes (T-CU) von der Zugriffs-Kontroll-Instanz (ZKI) seine Daten über deren enthaltenen Client-Daten-Identifikationswerte (S-CDI) auf der Speichervorrichtung (SV) speichert und auffindet, indem er jeweils Session-Daten-Identifikationswerte (T-XDI) durch zumindest die Anwendung der ausgewählten Äquivalenz-Umformungsfunktion auf seine Client-Daten-Identifikationswerte (S-CDI) und den Session-Client-Umwandlungswert (T-CU) berechnet und ausschließlich Session-Daten-Identifikationswerte (T-XDI) anstatt Client-Daten-Identifikationswerte (S-CDI) an die Speichervorrichtung sendet,
und die Speichervorrichtung (SV) nach dem Festlegen eines Session-Client-Umwandlungswert-Schutzwertes (T-CUS) für einen Client (CL) auf alle von diesem Client erhaltenen Session-Daten-Identifikationswerte (T-XDI) vor deren Speicherung inklusive der Daten auf der Speichervorrichtung (SV) oder vor deren Auffinden zumindest die ausgewählte Äquivalenz-Umformungsfunktion auf diese Session-Daten-Identifikationswerte (T-XDI) und den Session-Client-Umwandlungswert-Schutzwert (T-CUS) anwendet und somit jeweils Speichervorrichtungs-Daten-Identifikationswerte (S-SDI) erhält, welche den Client-Daten-Identifikationswerten (S-CDI) statisch zugehörig sind, und diese zusammen mit den Daten speichert bzw. die aufgefundenen Daten an den Client (CL) ohne deren Speichervorrichtungs-Daten-Identifikationswerte (S-SDI) liefert,
sodass sichergestellt ist, dass ein Client (CL) niemals Daten auf der Speichervorrichtung (SV) Speichern und Auffinden kann, ohne dass er temporäre Ergänzungsinformation von der Zugriffs-Kontroll-Instanz (ZKI) erhält, wodurch die Zugriffs-Kontroll-Instanz (ZKI) den Zugriff auf die Daten durch Clients bedingungsabhängig durch Nicht-Weitergabe oder Gültigkeitseinschränkungen der temporären Ergänzungsinformationen unterbindet.

2. Verfahren nach Anspruch 1, **dadurch gekennzeichnet, dass** die Zugriffs-Kontroll-Instanz (ZKI) über ein beliebiges, nicht flüchtiges Client-Zugriffs-Kontroll-Instanz-Geheimnis (S-CG) verfügt und im Client-Initialisierungsschritt der Client-Umwandlungswert (S-CU) aus einem sicheren Hash gebildet wird, der zumindest auf das Client-Zugriffs-Kontroll-Instanz-Geheimnis (S-CG) und auf das Client-Kennzeichen (S-CK) angewandt wird und die Zugriffs-Kontroll-Instanz (ZKI) somit die Client-Umwandlungswerte (S-CU) für beliebige Clients berechnen kann, ohne diese speichern zu müssen.

3. Verfahren nach Anspruch 1 oder Anspruch 2, **dadurch gekennzeichnet, dass** die Zugriffs-Kontroll-Instanz (ZKI) über ein beliebiges, nicht flüchtiges Speichervorrichtungs-Zugriffs-Kontroll-Instanz-Geheimnis (S-SG) verfügt und im Client-Initialisierungsschritt das ZKI-SV-Geheimnis (S-ZSG) von der Zugriffs-Kontroll-Instanz (ZKI) aus einem sicheren Hash gebildet wird, der zumindest auf das Speichervorrichtungs-Zugriffs-Kontroll-Instanz-Geheimnis (S-SG) und auf das Client-Kennzeichen (S-CK) angewandt wird, und das die Zugriffs-Kontroll-Instanz (ZKI) das ZKI-SV-Geheimnis (S-ZSG) zusammen mit dem Client-Kennzeichen (S-CK) an die Speichervorrichtung (SV) zur nichtflüchtigen Speicherung überträgt und die Zugriffs-Kontroll-Instanz (ZKI) somit die ZKI-SV-Geheimnisse (S-ZSG) für beliebige Client-Kennzeichen (S-CK) auf der Positivliste (PL) berechnen kann, ohne diese speichern zu müssen.

4. Verfahren nach einem der vorhergehenden Ansprüche, **dadurch gekennzeichnet, dass** die Speichervorrichtung (SV) einen zusätzlichen, Client-übergreifenden Speichervorrichtungs-AES-Schlüssel (SV-AES-Schlüssel) aufweist
und dass die Speichervorrichtung (SV) bei Erhalt des ZKI-SV-Geheimnis (S-ZSG) von der Zugriffs-Kontroll-Instanz (ZKI) das ZKI-SV-Geheimnis (S-ZSG) mit dem Speichervorrichtungs-AES-Schlüssel (SV-AES-Schlüssel) verschlüsselt und das verschlüsselte ZKI-SV-Geheimnis (S-ZSG-AES) an die Zugriffs-Kontroll-Instanz (ZKI) übergibt und diese wiederum das verschlüsselte ZKI-SV-Geheimnis (S-ZSG-AES) an den Client übergibt
und dass der Client (CL) bei der Session-Start-Anfrage sein Client-Kennzeichen (S-CK) und auch das verschlüsselte ZKI-SV-Geheimnis (S-ZSG-AES) an die Speichervorrichtung (SV) sendet und diese das verschlüsselte ZKI-SV-Geheimnis mit dem Speichervorrichtungs-AES-Schlüssel (SV-AES-Schlüssel) entschlüsselt
und somit das ZKI-SV-Geheimnis (S-ZSG) des Clients (CL) der Speichervorrichtung (SV) bekannt ist und dieses für die Generierung des Session-Client-Umwandlungsschutzwertes (T-CUS) verwendet wird, ohne dass die Speichervorrichtung (SV) das ZKI-SV-Geheimnis dauerhaft speichern muss und somit anstatt einer verhältnismäßig langsamen Suchfunktion eine schnelle AES-Verschlüsselung ausführt.

5. Verfahren nach einem der vorhergehenden Ansprüche, **dadurch gekennzeichnet, dass** die Zugriffs-Kontroll-Instanz (ZKI) im anfänglichen Client-Initialisierungsschritt
zusätzlich einen geheimen Speichervorrichtungs-Umwandlungswert (S-SU) für das jeweilige Client-Kennzeichen (S-CK) beliebig generiert und diesen dauerhaft abrufen oder berechnen kann,
und dass die die Zugriffs-Kontroll-Instanz (ZKI), nachdem sie einen Session-Kennzeichnungswert (T-XK) zusammen mit dem Client-Kennzeichen (S-CK) im Session-Aufbauschritt erhalten hat zusätzlich
einen Session-Speichervorrichtungs-Umwandlungswert-Schutzwert (T-SUS) als zufälligen Wert generiert
und den Session-Client-Umwandlungswert (T-CU) als temporäre Ergänzungsinformation dadurch errechnet, dass sie zumindest die ausgewählte Äquivalenz-Umformungsfunktion auf den Session-Client-Umwandlungswert-Schutzwert (T-CUS), den Client-Umwandlungswert (S-CU) und den Session-Speichervorrichtungs-Umwandlungswert-Schutzwert (T-SUS) anwendet und diesen Session-Client-Umwandlungswert (T-CU) dem Client (CL) zur flüchtigen Speicherung übermittelt,
und den Session-Speichervorrichtungs-Umwandlungswert (T-SU) dadurch errechnet, dass sie zumindest die ausgewählte Äquivalenz-Umformungsfunktion auf den Session-Speichervorrichtungs-Umwandlungswert-Schutzwert (T-SUS) und den Speichervorrichtungs-Umwandlungswert (S-SU) anwendet und diesen Session-Speichervorrichtungs-Umwandlungswert (T-SU) dem Client (CL) einzig zur Übertragung an die Speichervorrichtung (SV) übermittelt und dass der Client (CL) den übermittelten Session-Speichervorrichtungs-Umwandlungs-Schutzwert (T-SU) an die Speichervorrichtung (SV) überträgt und die Speichervorrichtung (SV) den Session-Client-Umwandlungswert-Schutzwert (T-CUS) erweitert, indem sie die ausgewählte Äquivalenz-Umformungsfunktion auf den bestehenden Session-Client-Umwandlungswert-Schutzwert (T-CUS) und den Session-Speichervorrichtungs-Umwandlungswert (T-SU) anwendet.

6. Verfahren einem der vorhergehenden Ansprüche, **dadurch gekennzeichnet, dass** die Speichervorrichtung (SV) beim Auffinden von Speichervorrichtungs-Daten-Identifikationswerten (S-SDI) jeweils die Daten und anstatt deren zugehörigen Speichervorrichtungs-Daten-Identifikationswerte (S-SDI) die temporären Session-Daten-Identifikationswerte (T-XDI) an den Client (CL) überträgt.

7. Verfahren nach einem der vorhergehenden Ansprüche, **dadurch gekennzeichnet, dass** als sichere Hashfunktion der SHA3 verwendet wird und als ausgewählte Äquivalenzfunktion ein exklusives Oder (XOR) auf alle Bits der jeweiligen Werte angewandt wird.

## Claims

1. Method for storing and locating data of clients (CL) identifiable by unique client IDs (S-CK) on a storage facility (SV) whereby these data contain at least client data identification values (S-CDI) which the client (CL) assigns to the data at will and where this data is located by the client (CL) on the storage facility (SV) solely via these client data identification values (S-CDI), and whereby an access control instance (ZKI) is present which has an adjustable whitelist (PL) as a listing of client IDs (S-CK) of those selected clients (CL) that, solely in a session set-up step starting with a session start request, receive temporary supplemental information from said access control instance (ZKI) with which they can store and locate data on the storage facility (SV), with each item of temporary supplemental information expiring after a set time, **characterized in that** one equivalence transformation function is selected from the totality of functions suitable for equivalence transformation, in a preferred embodiment an exclusive OR (XOR),
an initial client initialization step is executed for each client ID (S-CK) on the whitelist (PL) of the access control instance (ZKI) in which at least
one ACI/SF secret (S-ZSG), which can be any value, is set for the respective client ID (S-CK) as a shared secret between the access control instance (ZKI) and the storage facility (SV) such that both the access control instance (ZKI) and the storage facility (SV) can permanently access or calculate the ACI-SF secret (S-ZSG) for the respective client ID (S-CK),
the access control instance (ZKI) generates a secret client conversion value (S-CU) for the respective client ID (S-CK), which can be any value, and can permanently access or calculate it,
a client (CL), in order to obtain temporary supplemental information from the access control instance (ZKI), which is required for the subsequent storage and locating of data, sends a session start request in the session set-up step to the storage facility (SV) which contains at least its client ID (S-CK),
and in response receives from the storage facility (SV) a temporary, one-time session ID value (T-XK) and the client (CL) transfers this session ID value (T-XK) together with the client ID (S-CK) to the access control instance (ZKI),
and after the access control instance (ZKI) has received this session ID value (T-XK) together with the client ID (S-CK), both the access control instance (ZKI) and the storage facility (SV) respectively calculate a session client conversion value guard value (T-CUS) by both applying a secure hash function to at least the ACI/SF secret (S-ZSG) and the one-time session ID value (T-XK),
and the access control instance (ZKI) calculates a session client conversion value (T-CU) as temporary supplemental information by applying at least the selected equivalence transformation function to the session client conversion value guard value (T-CUS) and the client conversion value (S-CU), and sends this session client conversion value (T-CU) to the client (CL) for volatile storage,
and that a client (CL), on receipt of a session client conversion value (T-CU) from the access control instance (ZKI), stores and locates its data via its client data ID values (S-CDI) on the storage facility (SV) by calculating session data ID values (T-XDI) by at least applying the selected equivalence transformation function to its client data ID values (S-CDI) and the session client conversion value (T-CU) respectively and sending solely session data ID values (T-XDI) instead of client data ID values (S-CDI) to the storage facility,
and the storage facility (SV), after setting a session client conversion value guard value (T-CUS) for a client (CL), applies at least the selected equivalent transformation function to all session data ID values (T-XDI) received from said client, either before they are stored, including the data on the storage facility (SV), or before they are located, to said session data ID values (T-XDI) and the session client conversion value guard value (T-CUS), and thus receives storage facility data identification values (S-SDI) which have a static association with the client data identification values (S-CDI), and stores these together with the data or sends the located data to the client (CL) without their storage facility data identification values (S-SDI), such that it is ensured that a client (CL) can never store and locate data on the storage facility (SV) unless it receives temporary supplemental information from the access control instance (ZKI), whereby the access control instance (ZKI) conditionally prevents access to the data by clients through non-disclosure or validation constraints on the temporary supplemental information.

2. Method according to Claim 1, **characterized in that** the access control instance (ZKI) has a non-volatile client/access control instance secret (S-CG), which can be any value, and in the client initialization step the client conversion value (S-CU) is generated from a secure hash which is applied at least to the client/access control instance secret (S-CG) and to the client ID (S-CK) so that the access control instance (ZKI) can calculate the client conversion values (S-CU) for any clients without the need to store them.

3. Method according to Claim 1 or 2, **characterized in that** the access control instance (ZKI) has a non-volatile storage facility/access control instance secret (S-SG), which can be any value, and in the client initialization step the ACI/SF secret (S-ZSG) is generated by the access control instance (ZKI) from a secure hash which is applied at least to the storage facility/access control instance secret (S-SG) and to the client ID (S-CK), and that the access control instance (ZKI) transmits the ACI/SF secret (S-ZSG) together with the client ID (S-CK) to the storage facility (SV) for non-volatile storage, allowing the access control instance (ZKI) to calculate the ACI/SF secrets (S-ZSG) for any client ID (S-CK) on the whitelist (PL) without the need to store them.

4. Method according to any of the preceding claims, **characterized in that** the storage facility (SV) has an additional, cross-client storage facility AES key (SV-AES key)
and that the storage facility (SV) on receipt of the ACI/SF secret (S-ZSG) from the access control instance (ZKI) encrypts the ACI/SF secret (S-ZSG) with the storage facility AES key (SV-AES key) and transfers the encrypted ACI/SF secret (S-ZSG-AES) to the access control instance (ZKI) which in turn transfers the encrypted ACI/SF secret (S-ZSG-AES) to the client
and that the client (CL) at the session start request sends its client ID (S-CK) and also the encrypted ACI/SF secret (S-ZSG-AES) to the storage facility (SV) and the latter decrypts the encrypted ACI/SF secret using the storage facility AES key (SV-AES key)
so that the client's (CL) ACI/SF secret (S-ZSG) is known to the storage facility (SV) and is used to generate the session client conversion guard value (T-CUS) without the need for the storage facility (SV) to permanently store the ACI/SF secret and thus instead of a relatively slow search function executes rapid AES encryption.

5. Method according to any of the preceding claims, **characterized in that** the access control instance (ZKI) in the initial client initialization step
additionally generates a secret storage facility conversion value (S-SU) for the respective client ID (S-CK), which can be any value, and can permanently access or calculate it,
and that the access control instance (ZKI), after it receives a session ID value (T-XK) together with the client ID (S-CK) in the session set-up step, additionally generates a session storage facility conversion value guard value (T-SUS) as a random value
and calculates the session client conversion value (T-CU) as temporary supplemental information by applying at least the selected equivalence transformation function to the session client conversion value guard value (T-CUS), the client conversion value (S-CU) and the session storage facility conversion value guard value (T-SUS) and sends this session client conversion value (T-CU) to the client (CL) for volatile storage,
and calculates the session storage facility conversion value (T-SU) by applying at least the selected equivalence transformation function to the session storage facility conversion value guard value (T-SUS) and the storage facility conversion value (S-SU) and transmits said session storage facility conversion value (T-SU) to the client (CL) solely for transfer to the storage facility (SV)
and that the client (CL) sends the transmitted session client conversion value guard value (T-SU) to the storage facility (SV) and the storage facility (SV) extends the session client conversion value guard value (T-CUS) by applying the selected equivalence transformation function to the existing session client conversion value guard value (T-CUS) and the session storage facility conversion value (T-SU).

6. Method according to any of the preceding claims, **characterized in that** the storage facility (SV) on locating storage facility data identification values (S-SDI) respectively sends the data and, instead of the storage facility data identification values (S-SDI) associated with it, the temporary session data ID values (T-XDI) to the client (CL).

7. Method according to one of the preceding claims, **characterized in that** SHA3 is used as secure hash function and an exclusive OR (XOR) is applied as selected equivalent function to all bits of the respective values.

## Revendications

1. Procédé de mémorisation et de recherche de données de clients (CL) identifiables par des identificateurs de client univoques (S-CK) sur un dispositif de mémoire (SV), ces données contenant au moins des valeurs d'identification de données de client (S-CDI) que le client (CL) associe aux données arbitrairement, et ces données étant trouvées par le client (CL) sur le dispositif de mémoire (SV) exclusivement par l'intermédiaire de ces valeurs d'identification de données de client (S-CDI), et une instance de contrôle d'accès (ZKI) étant présente, qui présente une liste positive adaptable (PL) sous forme d'une énumération des identificateurs de client (S-CK) de ces clients sélectionnés (CL) qui reçoivent exclusivement dans une étape d'établissement de session, en commençant par une demande de démarrage de session, une information complémentaire temporaire de cette instance de contrôle d'accès (ZKI) et qui peuvent mémoriser et trouver des données sur le dispositif de mémoire (SV) à l'aide de celle-ci, chaque information complémentaire temporaire perdant sa validité respectivement après une période déterminée,
**caractérisé en ce que**
une fonction de conversion d'équivalence est sélectionnée parmi l'ensemble des fonctions aptes à la conversion d'équivalence, de préférence un OU exclusif (XOR),
pour chaque identificateur de client (S-CK) sur la liste positive (PL) de l'instance de contrôle d'accès (ZKI), une étape initiale d'initialisation de client est exécutée, dans laquelle au moins
un secret ZKI-SV (S-ZSG) librement sélectionnable est défini pour l'identificateur de client (S-CK) respectif en tant que secret partagé entre l'instance de contrôle d'accès (ZKI) et le dispositif de mémoire (SV) de telle sorte que l'instance de contrôle d'accès (ZKI) et le dispositif de mémoire (SV) peuvent appeler ou calculer en permanence le secret ZKI-SV (S-ZSG) pour l'identificateur de client respectif (S-CK), l'instance de contrôle d'accès (ZKI) génère arbitrairement une valeur secrète de conversion de client (S-CU) pour l'identificateur de client respectif (S-CK) et peut appeler ou calculer celle-ci en permanence,
**en ce qu'**un client (CL), pour la réception d'une information complémentaire temporaire de l'instance de contrôle d'accès (ZKI), qui est nécessaire pour la mémorisation et la recherche ultérieures de données, envoie au dispositif de mémoire (SV), lors de l'étape d'établissement de la session, une demande de démarrage de session qui contient au moins son identificateur de client (S-CK),
et reçoit en réponse du dispositif de mémoire (SV) une valeur d'identification de session (T-XK) temporaire et unique et le client (CL) transmet cette valeur d'identification de session (T-XK) ainsi que l'identificateur de client (S-CK) à l'instance de contrôle d'accès (ZKI),
et après que l'instance de contrôle d'accès (ZKI) a reçu cette valeur d'identification de session (T-XK) ainsi que l'identificateur de client (S-CK), l'instance de contrôle d'accès (ZKI) et le dispositif de mémoire (SV) calculent chacun une valeur de protection de valeur de conversion de client de session (T-CUS) en appliquant tous deux une fonction de hachage sécurisée à au moins le secret ZKI-SV (S-ZSG) et la valeur d'identification de session unique (T-XK),
et l'instance de contrôle d'accès (ZKI) calcule une valeur de conversion de client de session (T-CU) en tant qu'information supplémentaire temporaire en appliquant au moins la fonction de conversion d'équivalence sélectionnée à la valeur de protection de valeur de conversion de client de session (T-CUS) et à la valeur de conversion de client (S-CU) et en transmettant cette valeur de conversion de client de session (T-CU) au client (CL) pour une mémorisation volatile,
et **en ce qu'**un client (CL), après avoir reçu une valeur de conversion de client de session (T-CU) de l'instance de contrôle d'accès (ZKI), mémorise et trouve ses données sur ses valeurs d'identification de données de client (S-CDI) contenues sur le dispositif de mémoire (SV), en calculant respectivement des valeurs d'identification de données de session (T-XDI) en appliquant au moins la fonction de conversion d'équivalence sélectionnée à ses valeurs d'identification de données de client (S-CDI) et à la valeur de conversion de client de session (T-CU) et en envoyant exclusivement des valeurs d'identification de données de session (T-XDI) au lieu de valeurs d'identification de données de client (S-CDI) au dispositif de mémoire,
et le dispositif de mémoire (SV), après avoir établi une valeur de protection de valeur de conversion de client de session (T-CUS) pour un client (CL), applique à toutes les valeurs d'identification de données de session (T-XDI) reçues de ce client, avant de les mémoriser, y compris les données, sur le dispositif de mémoire (SV) ou avant de les trouver, au moins la fonction de conversion d'équivalence sélectionnée à ces valeurs d'identification de données de session (T-XDI) et à la valeur de protection de valeur de conversion de client de session (T-CUS) et obtient ainsi respectivement des valeurs d'identification de données de dispositif de mémoire (S-SDI), qui sont statiquement associées aux valeurs d'identification de données de client (S-CDI), et les mémorise avec les données, respectivement fournit les données trouvées au client (CL) sans leurs valeurs d'identification de données de dispositif de mémoire (S-SDI),
de sorte qu'il est garanti qu'un client (CL) ne peut jamais mémoriser et trouver des données sur le dispositif de mémoire (SV) sans recevoir des informations complémentaires temporaires de l'instance de contrôle d'accès (ZKI), l'instance de contrôle d'accès (ZKI) empêchant ainsi l'accès aux données par des clients en fonction des conditions en ne transmettant pas ou en limitant la validité des informations complémentaires temporaires.

2. Procédé selon la revendication 1, **caractérisé en ce que** l'instance de contrôle d'accès (ZKI) dispose d'un secret d'instance de contrôle d'accès client non volatile quelconque (S-CG) et **en ce que**, dans l'étape d'initialisation du client, la valeur de conversion de client (S-CU) est formée à partir d'un hachage sécurisé, qui est appliqué au moins au secret d'instance de contrôle d'accès client (S-CG) et à l'identificateur de client (S-CK), l'instance de contrôle d'accès (ZKI) pouvant ainsi calculer les valeurs de conversion de client (S-CU) pour des clients quelconques sans avoir à les mémoriser.

3. Procédé selon la revendication 1 ou la revendication 2, **caractérisé en ce que** l'instance de contrôle d'accès (ZKI) dispose d'un secret d'instance de contrôle d'accès de dispositif de mémoire non volatile quelconque (S-SG) et, lors de l'étape d'initialisation du client, le secret ZKI-SV (S-ZSG) est formé par l'instance de contrôle d'accès (ZKI) à partir d'un hachage sécurisé, qui est appliqué au moins au secret de l'instance de contrôle d'accès du dispositif de mémoire (S-SG) et à l'identificateur de client (S-CK), et **en ce que** l'instance de contrôle d'accès (ZKI) transmet le secret ZKI-SV (S-ZSG) en même temps que l'identificateur de client (S-CK) au dispositif de mémoire (SV) pour une mémorisation non volatile, l'instance de contrôle d'accès (ZKI) pouvant ainsi calculer les secrets ZKI-SV (S-ZSG) pour n'importe quel identificateur de client (S-CK) sur la liste positive (PL) sans avoir à les mémoriser.

4. Procédé selon l'une quelconque des revendications précédentes, **caractérisé en ce que** le dispositif de mémoire (SV) comprend une clé AES de dispositif de mémoire (clé AES SV) supplémentaire, commune à tous les clients,
et **en ce que** le dispositif de mémoire (SV), lorsqu'il reçoit le secret ZKI-SV (S-ZSG) de l'instance de contrôle d'accès (ZKI), crypte le secret ZKI-SV (S-ZSG) avec la clé AES du dispositif de mémoire (clé AES SV) et transmet le secret ZKI-SV crypté (S-ZSG-AES) à l'instance de contrôle d'accès (CL) qui, à son tour, transmet le secret ZKI-SV crypté (S-ZSG-AES) au client,
et **en ce que** le client (CL), lors de la demande de démarrage de session, envoie son identificateur de client (S-CK) et également le secret ZKI-SV crypté (S-ZSG-AES) au dispositif de mémoire (SV) et celui-ci décrypte le secret ZKI-SV crypté avec la clé AES de dispositif de mémoire (clé SV-AES),
et ainsi le secret ZKI-SV (S-ZSG) du client (CL) est connu du dispositif de mémoire (SV) et celui-ci est utilisé pour la génération de la valeur de protection de conversion de client de session (T-CUS), sans que le dispositif de mémoire (SV) doive mémoriser en permanence le secret ZKI-SV et effectue ainsi un cryptage AES rapide au lieu d'une fonction de recherche relativement lente.

5. Procédé selon l'une des revendications précédentes, **caractérisé en ce que** l'instance de contrôle d'accès (ZKI), lors de l'étape initiale d'initialisation du client,
génère en outre arbitrairement une valeur secrète de conversion de dispositif de mémoire (S-SU) pour l'identificateur de client respectif (S-CK) et peut l'appeler ou la calculer de manière permanente,
et **en ce que** l'instance de contrôle d'accès (ZKI), après avoir reçu une valeur d'identification de session (T-XK) en même temps que l'identificateur de client (S-CK) dans l'étape d'établissement de la session, en outre
génère une valeur de protection de conversion de dispositif de mémoire de session (T-SUS) en tant que valeur arbitraire,
et calcule la valeur de conversion de client de session (T-CU) en tant qu'information supplémentaire temporaire en appliquant au moins la fonction de conversion d'équivalence sélectionnée à la valeur de protection de valeur de conversion de client de session (T-CUS), à la valeur de conversion de client (S-CU) et à la valeur de protection de valeur de conversion de dispositif de mémoire de session (T-SUS) et transmet cette valeur de conversion de client de session (T-CU) au client (CL) pour une mémorisation volatile,
et calcule la valeur de conversion de dispositif de mémoire de session (T-SU) en appliquant au moins la fonction de conversion d'équivalence sélectionnée à la valeur de protection de valeur de conversion de dispositif de mémoire de session (T-SUS) et à la valeur de conversion de dispositif de mémoire (S-SU), et transmet cette valeur de conversion de dispositif de mémoire de session (T-SU) au client (CL) uniquement pour une transmission au dispositif de mémoire (SV),
et **en ce que** le client (CL) transmet la valeur de protection de conversion de dispositif de mémoire de session (T-SU) transmise au dispositif de mémoire (SV) et le dispositif de mémoire (SV) étend la valeur de protection de valeur de conversion de client de session (T-CUS) en appliquant la fonction de conversion d'équivalence sélectionnée à la valeur de protection de valeur de conversion de client de session (T-CUS) existante et à la valeur de conversion de dispositif de mémoire de session (T-SU).

6. Procédé selon l'une quelconque des revendications précédentes, **caractérisé en ce que** le dispositif de mémoire (SV), lorsqu'il trouve des valeurs d'identification de données de dispositif de mémoire (S-SDI), transmet respectivement les données et, au lieu de leurs valeurs d'identification de données de dispositif de mémoire (S-SDI) associées, les valeurs d'identification de données de session temporaires (T-XDI) au client (CL).

7. Procédé selon l'une des revendications précédentes, **caractérisé en ce que** l'on utilise comme fonction de hachage sécurisée le SHA3 et que l'on applique comme fonction d'équivalence sélectionnée un OU exclusif (XOR) à tous les bits des valeurs respectives.
